# EUROPEAN PATENT SPECIFICATION

(11) **EP 2 546 381 B1**
(45) Date of publication and mention of the grant of the patent: **02.05.2018**
(21) Application number: 11762875.0
(22) Date of filing: 30.03.2011
(51) Int. Cl.: C22C 38/02, C21D 9/32, C23C 8/22, C23C 8/80, C21D 1/06, C22C 38/04, C22C 38/06, C22C 38/14, C22C 38/18, C21D 9/28, F16H 55/06, C21D 1/10, C21D 1/18, C21D 9/30

(54) **CARBURIZED STEEL MEMBER AND METHOD FOR PRODUCING SAME**
AUFGEKOHLTES STAHLELEMENT UND VERFAHREN ZU SEINER HERSTELLUNG
ELÉMENT D'ACIER CÉMENTÉ ET PROCÉDÉ DE PRODUCTION DE CELUI-CI

(30) Priority: 30.03.2010 JP 2010079437
(43) Date of publication of application: 16.01.2013
(73) Proprietor: Aisin AW Co., Ltd., Fujii-cho Anjo-shi Aichi 444-1192 (JP); Nippon Steel & Sumitomo Metal Corporation, Tokyo 100-8071 (JP)
(72) Inventor: OHBAYASHI Koji, Anjo-shi Aichi 444-1192 (JP); TAGUCHI Keita, Anjo-shi Aichi 444-1192 (JP); KATO Susumu, Anjo-shi Aichi 444-1192 (JP); KOZAWA Shuji, Tokyo 100-8071 (JP); KUBOTA Manabu, Tokyo 100-8071 (JP); ADACHI Yuji, Tokai-shi Aichi 476-8666 (JP); SATO Hirokazu, Tokai-shi Aichi 476-8666 (JP)
(74) Representative: TBK
(86) International application number: PCT/JP2011/057935
(87) International publication number: WO 2011/122651

(56) References cited:
- EP-A1- 1 876 256
- WO-A1-2006/118243
- WO-A1-2007/034911
- JP-A- 8 311 607
- JP-A- H08 311 607
- JP-A- H09 241 821
- US-A1- 2005 257 860
- US-A1- 2009 257 860

## Description

### TECHNICAL FIELD

The present invention relates to a carburized steel member, for example, such as a gear manufactured by performing carburizing treatment, and a manufacturing method thereof.

### BACKGROUND ART

For example, a steel member such as a gear is, in many cases, subjected to carburizing treatment and quenching treatment as treatment for increasing surface hardness while keeping toughness (hereinafter, a steel member on which the carburizing treatment is performed will be referred to as a carburized steel member as appropriate). The carburizing treatment is treatment to increase carbon concentration of a surface in a state where a steel member is heated to an austenitizing temperature or higher, and quenching treatment is generally performed right after the carburizing treatment is performed. Toughness of the core of the steel member can be ensured and surface hardness of the steel member can be increased by performing the carburizing treatment and the quenching treatment.

A material to which Cr and Mo are added has been employed as a conventional carburized steel member in order to improve quenching properties and a resistance to temper softening. Furthermore, as a method of manufacturing a steel member by performing the quenching treatment after the carburizing treatment is performed, a new method has been proposed that is advantageous for improving the quality, in place of a conventional combination in which the quenching treatment and the carburizing treatment are simply combined in a continuous manner (see Patent Document 1).

In the manufacturing method described in Patent Document 1, "carburizing, slow cooling, and high-frequency quenching treatment" is employed in which a steel member is once slowly cooled after the carburizing treatment, and then rapidly cooled right after a desired portion is high-frequency heated for quenching. The employment of the "carburizing, slow cooling, and high-frequency quenching treatment" allows to restrain occurrence of deformation associated with the quenching treatment while ensuring high hardness of a surface layer portion of a specific part.

Hereinafter, in the specification, heat treatment including the "carburizing treatment" and the "quenching treatment" will be expressed as "carburizing and quenching treatment" in a general meaning. Unless otherwise clearly noted, the "carburizing and quenching treatment" is used as a term including the conventional method in which the quenching treatment is performed right after the carburizing treatment, and the carburizing, slow cooling, and high-frequency quenching treatment. When a distinction therebetween is necessary, a description will be added as such necessity arises.

### Prior Art Documents

### Patent Documents

Patent Document 1: WO2006/118242 US2005257860 discloses a gear having a first quench hardened layer which is formed on a surface layer of the rolling member and has a parent phase taking the form of martensite phase which forms a solid solution with carbon of 0.35 to 0.8 wt %, and a second quench hardened layer which is formed at a deeper layer under the first quench hardened layer and has a parent phase containing martensite phase which forms a solid solution with carbon of 0.07 to 0.3 wt%

### DISCLOSURE OF THE INVENTION

### Problem to be Solved by the Invention

It is ideal that at least an inner structure near a surface has a uniform martensitic structure in a carburized steel member after carburizing and quenching treatment is performed. However, especially when heating in a quenching step after the carburizing treatment is performed by heat treatment for a very short time, such as heating using high-density energy, it has been found that structural unevenness, which may be caused by alloy carbide, etc. remaining in martensite, readily occurs in an inner structure after the quenching treatment is performed. Such structural unevenness is not preferable because the unevenness influences durability, etc. of the carburized steel member.

For example, in a case where the carburizing, slow cooling, and high-frequency quenching treatment is employed using a steel material whose content rate of Cr, which has been conventionally used for obtaining a steel member having high hardness and high accuracy, is high (for example, Cr: 0.2 mass% or more), Cr carbide is produced in a carburized layer when the steel material is slowly cooled after the carburizing treatment. When high-frequency heating subsequent to the carburizing treatment and the slow cooling treatment is performed at a relatively high temperature (for example, 950°C or higher), the Cr carbide is dissolved in a matrix to form uniform austenite transformation, and a uniform quenched structure can be obtained and the hardness also becomes uniform. On the other hand, when the steel material is heated at a relatively low temperature (for example, lower than 950°C), the Cr carbide is not readily dissolved in a matrix, uniform austenite transformation is not readily obtained, and hardness unevenness may occur. Also when the content rate of Mo is high (for example, 0.1wt% or more), Mo carbide is produced, which contributes to occurrence of hardness unevenness similar to the case of Cr although not so remarkable as with the case of Cr.

The carburized layer of a part to be treated is heated with high-density energy such as high-frequency heating. During such heating to quench the part, how much the temperature is raised changes depending on the shape of the part, required properties, etc. For example, in case of a gear for which high accuracy is required and whose surface layer portion is required to have high hardness and inner portion is required to have low hardness providing high toughness, it is required to perform the quenching after only the surface layer portion of the gear is heated in outline when high-frequency quenching is performed. In order to achieve the processing, it is required to execute the high-frequency heating with a high power and for a short time. The heating for a short time prevents heat conduction to the inner portion to allow heating in outline. At this heating, because heating is performed with a high output, the surface layer portion becomes a relatively high temperature totally, and in particular, a tooth tip portion may be heated to a temperature near the melting point. In the heating method, as described above, the Cr carbide and Mo carbide are readily dissolved in a matrix, so that quenched structure having uniform hardness can be obtained at the surface layer portion.

On the other hand, for example, in a high torque transmission gear such as a differential ring gear, a stress is applied not only to a surface layer but also to an inner portion of a tooth portion when the gear is used, so that it is necessary to increase the hardness of the inner portion. Therefore, when the high torque transmission gear is high-frequency heated, it is necessary that not only the surface layer but also the inner portion of the gear is heated to the austenite transmission temperature or higher. In this case, because heat conduction to the inner portion is to be aggressively used so as to heat the inner portion, heating with a low power and for a relatively long time is employed in contradiction to the former heating. This also restrains rising of temperature of the tooth tip and allows heating of a relatively good temperature distribution. However, because of austenitic transformation at a relatively low temperature, when Cr carbide and Mo carbide exist in a large amount especially in a tooth root portion, etc. whose temperature is not readily increased, the Cr carbide and Mo carbide cannot be completely dissolved in the austenite and remains therein. This may cause lowered hardness and unevenness.

To address such a problem, it is important to optimize each processing method in the carburizing and quenching treatment. However, it has been also strongly required to optimize the chemical composition itself of the carburized steel member so as to restrain structural unevenness and hardness unevenness caused by such structural unevenness even when treatment conditions are different.

The present invention is made in light of such a problem, and provides a method of manufacturing a carburized steel member in which a chemical composition that can restrain hardness unevenness regardless of carburizing and quenching treatment conditions is aggressively employed, and further provides a method of manufacturing a carburized steel member including further preferable manufacturing conditions that take advantage of the chemical composition.

### Means for Solving the Problem

A first aspect of the present invention provides a carburized steel member manufactured by: a carburizing step of forming a carburized layer on a surface layer by heating a steel member to an austenitizing temperature or higher in a carburizing atmosphere where oxygen concentration is lower than that of the atmosphere; a cooling step of, subsequent to the carburizing step, cooling the steel member at a cooling rate slower than a cooling rate at which martensitic transformation occurs, and cooling the steel member to not higher than a temperature at which structural transformation caused by cooling is completed; and a quenching step of heating a desired portion of the steel member with high-density energy to an austenitic region, and thereafter cooling the steel member at a cooling rate of not slower than the cooling rate at which martensitic transformation occurs. The carburized steel member is characterized in that, as a basic chemical composition, the steel member consists of, by mass%, C:0.1% to 0.4%, Si: 0.35% to 3.0%, Mn: 0.1% to 3.0%, P: 0.03% or less, S: 0.15% or less, Al: 0.05% or less, and N: 0.03% or less, and a content of Cr is less than 0.2%, a content of Mo is 0.1% or less, optionally Ti: 0.005% to 0.2% and B: 0.0006% to 0.005%, optionally either or both of Nb: 0.01% to 0.3% and V:0.01% to 0.2%, optionally Ni:0.1% to 3.0%, and remainder is constituted of Fe and unavoidable impurities. The surface layer of the desired portion on which the quenching step is performed includes: a first layer having a carbon concentration higher than the range of the basic chemical composition and including a martensitic structure in which no grain boundary oxide layer caused by Si exists; a second layer located inside the first layer, having a carbon concentration within the range of the basic chemical composition, and including a martensitic structure; and a third layer located inside the second layer, having a carbon concentration within the range of the basic chemical composition, and including no martensitic structure.

A second aspect of the present invention provides a method of manufacturing a carburized steel member including: a carburizing step of forming a carburized layer on a surface layer by heating a steel member to an austenitizing temperature or higher in a carburizing atmosphere where oxygen concentration is lower than that of the atmosphere; a cooling step of, subsequent to the carburizing step, cooling the steel member at a cooling rate slower than a cooling rate at which martensitic transformation occurs, and cooling the steel member to not higher than a temperature at which structural transformation caused by cooling is completed; and a quenching step of heating a desired portion of the steel member with high-density energy to an austenitic region, and thereafter cooling the steel member at a cooling rate of not slower than the cooling rate at which martensitic transformation occurs. In the method, as a basic chemical composition, the steel member contains, by mass%, C:0.1% to 0.4%, Si: 0.35% to 3.0%, Mn: 0.1% to 3.0%, P: 0.03% or less, S: 0.15% or less, Al:0.05% or less, and N: 0.03% or less, and a content of Cr is less than 0.2%, a content of Mo is 0.1% or less, optionally Ti: 0.005% to 0.2% and B: 0.0006% to 0.005%, optionally either or both of Nb: 0.01% to 0.3% and V:0.01% to 0.2%, optionally Ni:0.1% to 3.0%, and remainder is constituted of Fe and unavoidable impurities.

A third aspect of the present invention provides a case hardening steel for the carburized steel member. The case hardening steel is characterized in that, as a basic chemical composition, the case hardening steel contains, by mass%, C: 0.1% to 0.4%, Si: 0.35% to 3.0%, Mn: 0.1% to 3.0%, P: 0.03% or less, S: 0.15% or less, Al:0.05% or less, and N: 0.03% or less, and a content of Cr is less than 0.2%, a content of Mo is 0.1% or less optionally Ti:0.005% to 0.2% and B: 0.0006% to 0.005%, optionally either or both of Nb: 0.01% to 0.3% and V: 0.01% to 0.2%, optionally Ni: 0.1% to 3.0%, and remainder is constituted of Fe and unavoidable impurities.

### Effects of the Invention

As described above, the present invention is specialized in a carburized steel member manufactured through a carburizing step performed under a low oxygen concentration atmosphere, a cooling step in which slow-cooling is performed under the above-mentioned specific conditions, and a quenching step employing heating with the high-density energy, and a method of manufacturing the same. The chemical composition within the above ranges is employed as the optimum chemical composition when the carburized steel member is manufactured by the manufacturing method.

Notable points in the chemical composition are that Cr and Mo are contained as impurities or the contents thereof are limited to less than 0.2% and 0.1% or less respectively even when added, and that the content of Si is increased to the range of 0.35% to 3.0%.

Cr is an element useful for improving quenching properties and increasing a resistance to temper softening. However, when Cr is added by 0.2% or more, Cr carbide is readily produced when the slow cooling is performed after the carburizing treatment. Once Cr carbide is produced, it may be difficult to dissolve the Cr carbide in a matrix when heating is subsequently performed by using high-density energy.

Furthermore, Mo is also an element useful for improving quenching properties and increasing a resistance to temper softening. However, when Mo is added to 0.1% or more, Mo carbide is readily produced when the slow cooling is performed after the carburizing treatment. Once Mo carbide is produced, it may be difficult to dissolve the Mo carbide in a matrix when heating is subsequently performed by using high-density energy.

Remaining of Cr carbide and Mo carbide in the structure causes structural unevenness, and eventually causes hardness unevenness.

Therefore, as described above, Cr is aggressively regarded as an optional component, and the content thereof is limited to less than 0.2% even when Cr is added. In the same manner, Mo is regarded as an optional component, and the content thereof is limited to 0.1% or less even when Mo is added. The improvement effects of the quenching properties and the resistance to temper softening when Cr and Mo are added are achieved by increasing the content of Si that may exert functions thereof to the range of 0.35% to 3.0%.

Therefore, formation of Cr carbide and Mo carbide is restrained when the slow cooling is performed after the carburizing treatment while ensuring quenching properties and a resistance to temper softening. Accordingly, even when heating means used in the carburizing step is limited to heating using high-density energy, and even when the heating is performed at a relatively low temperature, structural unevenness due to the presence of Cr carbide and Mo carbide can be reduced because formation itself of Cr carbide and Mo carbide is originally restrained, and a desired hardness can be obtained. Furthermore, material cost can be also reduced by reducing the additive amount of expensive Cr and Mo.

Furthermore, conventionally, an increase in the content of Si may cause grain boundary oxidization due to Si when the carburizing treatment is performed. On the contrary, as described above, occurrence of grain boundary oxidization can be restrained and reduction in structural properties associated with an increase in the content of Si can be prevented by restricting processing conditions of the carburizing step so that the carburizing step is executed under a carburizing atmosphere where oxygen concentration is lower than that of the atmosphere.

The resultant carburized steel member thus obtained has: a first layer having a carbon concentration higher than the range of the basic chemical composition and including a martensitic structure in which no grain boundary oxide layer caused by Si exists; a second layer located inside the first layer, having a carbon concentration within the range of the basic chemical composition, and including a martensitic structure; and a third layer located inside the second layer, having a carbon concentration within the range of the basic chemical composition, and including no martensitic structure, on the surface layer of the desired portion on which the quenching step is performed.

It is preferable that the thickness of the second layer (size in a depth direction from the surface) be larger than the thickness of the first layer. Accordingly, hardness of the carburized layer on the inner side can also be highly hardened in a relatively wide range. To increase the thickness of the second layer, that is, a layer in which the carburized structure is obtained while maintaining the carbon concentration of the base material, which is disposed inside the carburized layer, it is necessary for heating in the carburizing step to be performed at a relatively low temperature for a long time to deeply advance austenitizing. Also in this case, as described above, production of Cr carbide and Mo carbide can be restrained, so that structural unevenness can be reduced.

Accordingly, in the thus obtained carburized steel member, hardness unevenness is reduced as structural unevenness is reduced, thereby achieving excellent cost performance.

### BRIEF DESCRIPTION OF THE DRAWINGS

[FIG. 1] FIG. 1 is an explanatory diagram showing a configuration of heat treatment equipment used in an embodiment.
[FIG. 2] FIG. 2 is an explanatory diagram showing a heat pattern in a carburizing step and a cooling step in the embodiment.
[FIG. 3] FIG. 3 is an explanatory diagram showing a heat pattern in a quenching step in the embodiment.
[FIG. 4] FIG. 4 is an explanatory diagram showing a carburized steel member (differential ring gear) in the embodiment.
[FIG. 5] FIG. 5 is an explanatory diagram showing a detail of a tooth mold part of the differential ring gear in the embodiment.
[FIG. 6] FIG. 6 is a photograph showing a metal structure state near the tooth mold part of Test No.3 in the embodiment.
[FIG. 7] FIG. 7 is an explanatory diagram illustrating a structure of the metal structure of FIG. 6 in the embodiment.

### BEST MODES FOR CARRYING OUT THE INVENTION

First, a reason for restricting the basic chemical composition will be described. Hereinafter, mass% in the composition will be simply referred to as %. Herein, the expression of "basic chemical composition" denotes a basal chemical composition of a base material before carbon concentration of the surface layer is increased by carburizing treatment, that is, of steel itself.

### C: 0.1% to 0.4%

C is an element to be added for ensuring strength of steel, in particular, strength of the central portion. Therefore, the strength of an interior portion is ensured by setting the lower limit of the amount of C to 0.1%. However, the upper limit is set to 0.4% because the toughness is lowered and cutting properties of the material are deteriorated due to the fact that the hardness is increased when the content thereof exceeds 0.4%. The most preferable additive amount is 0.15% to 0.3%.

### Si: 0.35% to 3.0%

Si is an element useful for deoxidation of the steel, and as described above, is an element useful for providing strength and quenching properties necessary for the steel to improve a resistance to temper softening. The present developed steel has a characteristic that expensive Cr and Mo can be substantially reduced. However, there is a case in that the reduction of Cr and Mo becomes disadvantageous for a part for which a resistance to temper softening, such as a pitching strength of a gear, is required as compared with CrMo steel, which is conventional steel. Accordingly, Si is to be contained by 0.35% or more in order to obtain a necessary resistance to temper softening even when Cr and Mo are reduced. However, when the content of Si exceeds 3.0%, the effect is not only saturated but also causes an increase in hardness to deteriorate cutting properties of the material, so that it is necessary to set the content within the range of 0.35% to 3.0%. The most preferable range is more than 0.45% to 1.5%.

Furthermore, when a material to which a large amount of Si is added is used, in gas carburizing treatment using an oxidized gas, grain boundary oxidation occurs and a carburized abnormal layer is produced on the surface layer by Si in a carburizing step, because Si readily forms oxidation products. Therefore, the strength of the carburized layer is lowered to cause lowering of flexural fatigue strength and rolling contact fatigue strength. Herein, in the method of manufacturing the carburized steel member, as described above, a step is employed in which carburizing treatment is performed in a carburizing atmosphere where the oxygen concentration is lowered. This makes it possible to positively increase the Si content because a problem of grain boundary oxidation can be eliminated.

### Mn: 0.1% to 3.0%

While Mn is an element useful for deoxidation of the steel and is an element useful for improving quenching properties, but the effect is insufficient when the content is less than 0.1%. However, when the content exceeds 3.0%, the effect is not only saturated but also causes an increase in hardness to deteriorate cutting properties of the material, so that it is necessary to set the content within the range of 0.1% to 3.0%. The most preferable range is 0.5% to 1.5%.

### P: 0.03% or less

It is necessary that P is reduced as much as possible because P is segregated in a grain boundary to lower toughness, so that it is necessary to restrict the content thereof to 0.03% or less although it is difficult to reduce the content to 0.

### S: 0.15% or less

S forms MnS in the steel and is an element to be added in order to improve cutting properties of the material because of the formation. However, the effect obtained by the content of S is saturated when the content thereof exceeds 0.15%, and rather causes grain boundary segregation, resulting in grain boundary embrittlement. Accordingly, it is necessary to reduce the content of S to 0.15% or less. When the S amount is less than 0.001%, the improvement effect of cutting properties is not remarkable. Accordingly, the content of S should be 0.001% or more when the lower limit is defined. A more preferable range is within the range of 0.005% to 0.06%.

### Al: 0.05% or less

Alis precipitated and dispersed in the steel as a nitride. For this reason, Al is regarded as an element useful for preventing austenitic structure from being coarsened when the carburizing treatment is performed. However, when the content thereof exceeds 0.05%, precipitate is coarsened to cause embrittlement of steel. Accordingly, the upper limit is set to 0.05%. It is noted that a portion on which high-density energy quenching treatment is performed is recrystallized, and coarsened austenitic structure is fined. Accordingly, when only the portion on which the high-density energy quenching treatment is performed needs a high strength, and a region that is not heated with high-density energy does not need a high strength, it is not necessary to contain Al. However, when the region that is not heated with the high-density energy also needs a high strength, it is necessary to contain Al. In this case, when the amount of Al is less than 0.005%, the effect of preventing the austenitic structure from being coarsened is not remarkable. Accordingly, when the lower limit is defined, the amount is set to 0.005% or more. A more preferable range is 0.02% to 0.04%.

### N: 0.03% or less

N forms various types of nitrides, and has an effect to prevent the austenitic structure from being coarsened when the carburizing treatment is performed. However, when the content thereof exceeds 0.03%, forgeability is remarkably deteriorated. Accordingly, the upper limit is set to 0.03%. It is noted that a portion on which the high-density energy quenching treatment is performed is recrystallized, and coarsened austenitic structure is fined. Accordingly, when only the portion on which high-density energy quenching treatment is performed needs a high strength, and a region that is not heated with high-density energy does not need a high strength, it is not necessary to contain N. However, when the region that is not heated with the high-density energy also needs a high strength, it is necessary to contain N. In this case, when the amount of N is less than 0.003%, the effect of preventing the austenitic structure from being coarsened is not remarkable. Accordingly, when the lower limit is defined, it is necessary that the amount is set to 0.003% or more. A more preferable range is 0.005% to 0.02%.

### Cr: less than 0.2%

As described above, Cr is an element useful for improving quenching properties and a resistance to temper softening. However, when added by 0.2% or more, Cr carbide is readily produced during carburizing and slow cooling.

Specifically, when a heating temperature in a quenching step after the carburizing and the slow cooling is relatively low, solid solution of the Cr carbide once produced in a matrix becomes difficult, so that structural unevenness and hardness unevenness due to the structural unevenness readily occur.

The formation itself of the Cr carbide can be restrained by setting the Cr amount at the requested minimum, so that it is possible to prevent an adverse effect to the structure caused by the Cr carbide, even when subsequent heat conditions of the high-density energy are variously changed.

Even when the content of Cr is 0.2% or more, formation of the Cr carbide can be considerably restrained by employing a chemical composition satisfying a condition of [Si%]+[Ni%]+[Cu%]-[Cr%]>0.5. However, the hardness unevenness is not completely restrained. The most preferable range of the content of Cr is 0.1% or less.

### Mo: 0.1% or less

Although it is one of objects of the present application to reduce Mo, which is a rare metal and is relatively expensive among rare metals, Mo may be added by a very small amount. Mo is an element useful for improving quenching properties and a resistance to temper softening. However, containing of a large amount of Mo not only increases the cost but also may cause the problem of hardness unevenness as described above, so that it is necessary to set the upper limit to 0.1%. It is preferable to add no Mo when necessary quenching properties can be ensured by other elements. In this case, it is preferable that the content thereof be less than 0.01%, which is a condition that no Mo is aggressively added.

Furthermore, it is preferable that the basic chemical composition further contain Ti: 0.005% to 0.2%, B: 0.0006% to 0.005%.

### Ti: 0.005% to 0.2%

While Ti is an element that is readily combined with N, so that Ti provides an effect to prevent B from becoming BN to lose an improved effect of quenching properties by B, and is an element useful for preventing the austenitic structure from being coarsened when the carburizing treatment and the high-frequency quenching treatment are performed by being precipitated and dispersed in the steel as a carbonitride, the effect is insufficient when the content thereof is less than 0.005%. However, when the content exceeds 0.2%, precipitate is coarsened to make the steel brittle, so that the upper limit is set to 0.2%. The most preferable range of the addition is 0.01% to 0.03%.

### B: 0.0006% to 0.005%

While B is an element useful for providing quenching properties and strengthening grain boundary strength by being added, the effect is insufficient when the content thereof is less than 0.0006%. However, when the content exceeds 0.005%, the effect is saturated, so that it is necessary to set the content within the range of 0.0006% to 0.005%. The most preferable range is 0.001% to 0.003%.

Furthermore, it is preferable that the basic chemical composition further include either or both of Nb: 0.01% to 0.3% and V: 0.01% to 0.2%.

### Nb: 0.01% to 0.3%, V: 0.01% to 0.2%

While Nb and V are elements useful for preventing the austenitic structure from being coarsened when the carburizing treatment and the high-frequency quenching treatment are performed by being precipitated and dispersed in the steel as a carbonitride, the effect is insufficient when the content of each of Nb and V is less than 0.01%. However, when the additive amount thereof is too large, precipitate is coarsened to make the steel brittle, so that the upper limits of Nb and V are set to 0.3% and 0.2%, respectively. The most preferable ranges of the addition are 0.01% to 0.02% for Nb, and 0.01% to 0.05% for V.

Furthermore, the basic chemical composition may further include Ni: 0.1 to 3.0%.

### Ni: 0.1% to 3.0%

While Ni is an element useful for improving toughness, the effect is insufficient when the content thereof is less than 0.1%. However, when the content exceeds 3.0%, the effect is not only saturated but also causes an increase in hardness to deteriorate cutting properties of the material, so that it is necessary to set the range within 0.1% to 3.0%. The most preferable range is 0.5% to 1.5%.

Next, it is preferable to perform each step in the manufacturing method as described below.

Specifically, first, the carburizing step is performed in a carburizing atmosphere where the oxygen concentration is lower than that in the atmosphere. Specific examples include a method that is performed in a reduced pressure carburizing gas where the pressure is lowered than the atmospheric pressure. In other words, it is effective to employ a reduced pressure carburizing step. In the reduced pressure carburizing step, the carburizing treatment can be performed more efficiently than the conventional method because the carburizing treatment can be executed by a relatively small amount of carburizing gas while the high temperature inner portion of a carburizing oven is kept in a reduced pressure state. Furthermore, treatment time can be reduced, energy consumption can be reduced, and carburizing-quenching equipment itself can be downsized, because conventional long-time heating treatment using a large-sized heat treating oven is no longer required.

Then, when the reduced pressure carburizing step is applied, Cr is aggressively regarded as an optional ingredient, and an effect obtained by restricting the upper limit is especially effectively exerted. In other words, setting of conditions can be made by preliminarily calculating carbon potential, because carburizing is executed by an equilibrated reaction in the case of general gas carburizing. However, the setting of conditions by the calculation above is difficult because the reduced pressure carburizing treatment is a non-equilibrated reaction. Furthermore, when a steel member having irregularity portions such as a gear is subjected to the reduced pressure carburizing treatment, for example, a difference occurs in diffusion rate of entering carbon depending on the portions, the carburizing concentration of the surface to be obtained varies depending on the portions, and an intended modifying effect may not be obtained at a portion whose surface should be modified by the carburizing treatment. When the variation of the carburizing level becomes larger than that in the case of the general gas carburizing, content of a large amount of Cr may remarkably advance the formation of Cr carbide. Accordingly, restriction of the content of Cr is especially effective when the reduced pressure carburizing step is employed.

Furthermore, employment of the reduced pressure carburizing allows to restrain the amount of oxygen in the atmosphere to a low level by reducing pressure of the carburizing atmosphere with respect to the atmospheric pressure in the carburizing step. This makes it possible to prevent grain boundary oxidation from occurring in the carburized layer.

Furthermore, a carburizing method performed in a carburizing atmosphere where the oxygen concentration is lower than that in the atmosphere is not limited to the reduced pressure carburizing method. For example, a method can be employed in which grain boundary oxidation of the carburized layer is prevented by restraining the amount of oxygen in the atmosphere to a low level by filling nitrogen gas or inactive gas without reducing the pressure of the atmosphere.

The reduced pressure carburizing is also called as vacuum carburizing, and is carburizing treatment that is performed by reducing the pressure of the atmosphere in an oven and directly injecting gas of hydrocarbon system (for example, methane, propane, ethylene, and acetylene) as carburizing gas in the oven. The reduced pressure carburizing treatment generally includes a carburizing stage and a diffusion stage. In the carburizing stage, active carbon that is generated by resolution when the carburizing gas contacts a surface of the steel becomes carbide on the surface of the steel to be accumulated in the steel. In the diffusion stage, the carbide is resolved, and the accumulated carbon is dissolved in a matrix to be diffused toward an interior portion. It is noted that the supply route of the carbon is not limited to a route via the carbide, and it is alleged that there exists a route through which the carbon is directly dissolved in a matrix.

Furthermore, it is preferable that the carburizing step be performed under a reduced pressure condition of 1 to 100 hPa. When the reduced pressure during the carburizing in the reduced pressure carburizing step is lower than 1 hPa, there may be a possibility that a problem occurs such that expensive equipment is required for maintaining a degree of vacuum. On the other hand, when the reduced pressure exceeds 100 hPa, a problem may occur that soot is generated during the carburizing to cause carburizing concentration unevenness.

Furthermore, hydrocarbon series gas, such as acetylene, propane, butane, methane, ethylene, and ethane, may be applied as the carburizing gas.

Furthermore, it is preferable that the carburizing step be performed under a condition that the surface carburizing concentration of the steel member after diffusion is 0.8% or less. In this case, the carbon amount in the carburized layer is to be set to not more than that of eutectoid steel, austenitic transformation can be provided by heating during the quenching, and thus martensitic structure can be obtained without causing cementite precipitation by the subsequent rapid cooling.

Furthermore, it is preferable that the steel member on which the carburizing step is performed include a first portion and a second portion whose diffusion rate of carbon entering when the carburizing treatment is performed is different from that of the first portion because of the shapes, that the diffusion rate of the carbon entering the second portion be slower than that in the first portion, and that the carburizing step be performed under a condition that the surface carburizing concentration of the first portion is within a range of 0.65±0.1 mass%.

As described above, because the reduced pressure carburizing treatment is a non-equilibrated reaction, it has been found that when a steel member having irregularity portions such as a gear is subjected to a reduced pressure carburizing treatment, for example, the diffusion rate of the entering carbon differs depending on the portions, the carburizing concentration of the surface obtained varies depending on the portions, and an intended modifying effect may not be obtained at a portion whose surface should be modified by the carburizing treatment.

The carburizing concentration of the surface obtained changes between the time right after the carburizing stage in which the carburizing is advanced, and the time after the diffusion stage in which diffusion of carbon entering the interior portion thereafter is advanced because the reduced pressure carburizing treatment is a non-equilibrated reaction. The carburizing concentration is expressed as a value after the diffusion stage has passed. Accordingly, every carburizing concentration in the present specification is not a value obtained at the time right after the carburizing stage, but is a value obtained after the diffusion stage has passed (hereinafter, expressed in the same manner).

In light of such a circumstance, in order to optimize the condition when the reduced pressure carburizing step is performed on the steel member having the first portion (carbon readily diffused portion) and the second portion (carbon hardly diffused portion) whose diffusion rate of the carbon entering when the carburizing treatment is performed is different from that of the first portion because of the shapes, it has been found that it is effective to perform the reduced pressure carburizing step under a condition that the surface carburizing concentration of the first portion is within the range of 0.65±0.1 mass%.

It has been found by many experimental results for the first time that the surface carburizing concentration of the second portion of the steel member to be obtained, that is, the portion where the diffusion rate is slower than that of the first portion and the carburizing concentration of the surface after the carburizing treatment is higher than that of the first portion can be restrained within the range of 0.85 mass% or less by performing the reduced pressure carburizing treatment under the above conditions. Accordingly, the surface carburizing concentration of almost the whole surface of the portion whose surface is to be modified by the carburizing treatment of the steel member can be set within the range of 0.55 mass% to 0.85 mass%. With the surface carburizing concentration set within the range, quenching effect can be sufficiently obtained also at a portion whose surface carburizing concentration is near the lower limit (first portion), a failure due to excess carbon can be restrained at a portion whose surface carburizing concentration is near the upper limit (second portion), and an excellent modified surface can be obtained after the quenching, by subjecting the steel member to a special quenching step in which the steel member is subsequently heated using the high-frequency energy, and then rapidly cooled.

For the carburizing condition, it is necessary to perform a plurality times of preliminarily experiments in which temperature, type of carburizing gas, pressure, treatment time, etc. in the reduced pressure carburizing step are changed to find conditions by which the surface carburizing concentration of the first portion becomes within the above-mentioned specific range. It is noted that when the steel members that are members to be treated have a same shape, the number of times of the preliminarily experiments can be optionally reduced by accumulation of data. Furthermore, determination of the first portion and the second portion of the steel member may be made by measuring the carburizing concentration in a plurality of portions practically in the preliminarily experiments. Alternatively, the determination may be made by observing the shape because the determination can be relatively easily made based on the shape.

Furthermore, the cooling step is performed under at least a slow cooling condition in which the cooling rate is slower than the cooling rate at which martensitic transformation occurs in the steel member during cooling. Accordingly, generation of deformation due to the martensitic transformation can be restrained, and the carburizing treatment can be ended in an excellent state in the shape accuracy.

To be more specific, it is preferable that the cooling step be performed under a slow cooling condition by which the cooling rate during the time when at least the temperature of the steel member is A1 transformation point temperature or more is 0.1 °C/sec to 3.0 °C/sec. When the cooling rate of the cooling step exceeds 3.0 °C/sec during the time when the temperature of the steel member is not less than the A1 transformation point temperature, an effect to restrain occurrence of deformation during the cooling may not possibly be sufficiently obtained. On the other hand, when the cooling rate in the cooling step is set to less than 0.1°C/sec during the time when the temperature is not less than the A1 transformation point temperature of the steel member, it requires a long time before the temperature reaches the A1 transformation point temperature, and diffusion of the carburized carbon is advanced in the steel member during the time. The diffusion during the cooling may cause unevenness of diffusion speed due to the temperature difference depending on the portions. As a result, the carbon amount may vary.

Furthermore, it is preferable that the cooling step be performed in the cooling gas under a state where the pressure of the cooling gas is lowered than the atmospheric pressure, that is, be a reduced pressure cooling step. This makes it possible to further restrain the occurrence of deformation during the cooling.

In other words, when the cooling gas is agitated during the cooling, reducing of the pressure of the cooling gas enables to reduce a difference in the cooling rate of circulating cooling gas between an upwind side and a downwind side compared with the atmospheric pressure state. In other words, when the cooling is performed in the atmospheric pressure, thermal exchange is advanced when a member to be cooled is only made into contact with the cooling gas in the atmospheric pressure, and cooling of the member to be cooled is started. In this case, a gas convective flow forms an upwind side and a downwind side due to active gas agitation or heat, thereby causing a cooling rate difference. The cooling rate difference causes a temperature difference in the member to be cooled, whereby heat treatment deformation occurs. On the other hand, thermal exchange rate is originally slow on either of the upwind side and the downwind side by reducing the pressure of the cooling gas, so that a difference in cooling rate is difficult to occur. Accordingly, when the reduced pressure cooling in which the pressure of the cooling gas is reduced is employed, occurrence of heat treatment deformation is rare because the cooling is relatively uniformly advanced. Furthermore, even when no agitating is performed at all, in the case of a reduced pressure state, a difference of the cooling rate due to the stagnating flow of the cooling gas at different temperatures can be reduced compared with the case of the atmospheric pressure.

By using the effect obtained by reducing the pressure of the cooling gas, occurrence of deformation of the steel member on which the reduced pressure cooling step is performed can be restrained, and the steel member can be advanced to the quenching step while keeping the size accuracy to a high accuracy. The effect becomes most remarkable when slow cooling in which the cooling rate is lowered is employed as a reduced pressure slow cooling step. Accordingly, the steel member can be less deformed and highly accurately formed even after the quenching is performed, by making use of the advantages obtained by the above quenching step using the high-density energy.

Furthermore, by employing the reduced pressure carburizing step as the carburizing step and the reduced pressure cooling step as the cooling step, and performing these steps continuously, a reduced pressure carburizing chamber and a slow cooling chamber can be directly joined, and it is not necessary to provide an auxiliary chamber, etc. for adjusting a reduced pressure level between the chambers in practical equipment. In other words, a pressure difference between the chambers can be reduced because both of the reduced pressure carburizing step and the slow cooling step are performed in a reduced pressure state. Accordingly, the reduced pressure slow cooling treatment can be performed without exposing a product subjected to the reduced pressure carburizing treatment to a normal pressures state, which makes it possible to execute efficient treatment in which occurrence of deformation is restrained.

Furthermore, it is preferable that the reduced pressure condition of the cooling gas in the cooling step be, more specifically, 100 hPa to 650 hPa. In the reduced pressure cooling treatment, when the pressure is higher than the range of 100 hPa to 650 hPa, the effect of the reduced pressure may not be fully obtained, and on the other hand, it may be difficult to lower the pressure than the range because of the equipment structure.

Therefore, more preferably, a reduced pressure state of the cooling gas in the slow cooling step is set in the range of 100 hPa to 300 hPa.

Furthermore, it is important that the quenching step is performed by heating the desired portion of the steel member to austenitizing temperature or more by using the high-density energy, and then rapidly cooling the steel member at not slower than a rapid cooling critical cooling rate at which the martensitic transformation occurs at least in the carburized layer. The high-density energy includes, for example, a high-density energy beam such as an electron beam or a laser beam, and high-density energy such as high-frequency heating, which is not a beam. By using the high-density energy, it becomes possible to reduce the heat time, and sufficient hardness effects can be surely obtained because the composition is adjusted so as to be readily austenitized by the reduction of the amount of Cr.

Furthermore, it is preferable that the heating in the quenching step be performed by high-frequency heating. In this case, by employing the high-frequency heating, non-contact heating can be accurately performed by induction heating, and high effectiveness can thus be achieved. Furthermore, a known method can be applied as the high-frequency heating.

Furthermore, it is preferable that the rapid cooling be performed by water cooling. In other words, partial heating of the parts, instead of overall heating, can be precisely performed when the high-density energy is used, so that even when water quenching is performed thereafter by using water having very high cooling effect, occurrence of quenching deformation can be substantially restrained compared with the case of a conventional gas heating. Further, quenching properties can be improved, and strength of the quenched portion can be further increased, by the excellent rapid cooling effect achieved by the water cooling. Furthermore, by using this increased strength, simplification of the carburizing treatment (shortening of the treatment time) may be achieved, that is, a requested strength may be fulfilled even when the thickness of the carburized layer is reduced. In this case, the time of the entire heat treatment step can be further reduced.

Furthermore, it is preferable that the heating with the high-frequency heating be performed on the steel members each flowing one by one, and that the steel member be cooled by spraying cooling water toward the steel member from the periphery while rotating the steel member during cooling after the heating. In this case, the steel member can be cooled evenly when the cooling is performed, and occurrence of deformation can be further restrained.

Furthermore, it is preferable that the heating in the quenching step be performed under a condition that the whole range of not less than 1 mm in depth from the surface is austenitized without the surface being melt. The heating with the high-frequency energy allows only the uppermost surface of the steel member to be heated by applying very high-density energy within a very short time of, for example, 10 sec or less. Accordingly, only a region of less than 1 mm in depth from the surface can be heated to a desired high temperature. However, by selecting a relatively lower range of temperature (for example, 750°C to 950°C) as the austenitizing temperature of steel and by making input energy of the high-density energy relatively low so as to lengthen the heat time to a relatively long time (for example, about more than 10 sec), the heating can be performed on a portion of not less than 1 mm in depth from the surface by heat transmission. It has been found that, by executing the low-temperature and long-time heating with the high-density energy, quenching effect can be provided not only to the region of the carburized layer, but also to a depth region of not less than 1 mm in depth, and that the effect of restraining of deformation in the quenching step is increased as the austenitizing temperature becomes lower.

Considering that structure unevenness may occur if the content of Cr is not limited to the above-mentioned specific range, the effect obtained by the reduction of Cr is significant also in this case.

Furthermore, when the carburized steel member is a gear part including a number of protruded tooth portions, it is preferable that the heating be performed under a condition by which the surface and whole interior portions of the tooth portion are austenitized. It is desired for the gear member to increase surface hardness of the tooth portion, increase the toughness of the interior portion, and have excellent shape accuracy of the tooth portion. Accordingly, as described above, by selecting a relatively lower range of temperature (for example, 750°C to 950°C) as the austenitizing temperature of the steel, and by making input energy of the high-density energy relatively low so as to lengthen the heat time to a relatively long time, the quenching effect can be provided not only to a region of the carburized layer but also to the deep portion, and the effect of restraining of deformation is increased, which is very preferable.

Furthermore, the carburized steel members include drive system parts of vehicles. There are severe requirements to the drive system parts of the vehicles with regard to strength and size shape accuracy in addition to cost reduction. The above-mentioned manufacturing method is very useful to satisfy the requirements.

The drive system parts of the vehicles include, for example, a gear for an automatic transmission, a ring member, and other parts.

Furthermore, as described above, the heating treatment including the carburizing step, the cooling step, and the quenching step is a treatment method capable of restraining occurrence of deformation. In other words, in the cooling step after the carburizing, cooling is performed at a rate slower than the rate at which the martensitic transformation occurs. Accordingly, martensitic structure is not formed in the carburized layer nor in a core portion, and any one of ferrite, pearlite, and bainite, or a mixed structure thereof is formed. Accordingly, deterioration of product accuracy due to heat treatment deformation can be prevented because the martensitic transformation does not occur and deformation due to the martensitic transformation is not caused by the cooling in the cooling step.

The quenching using the high-density energy, such as high-frequency quenching, is performed after the cooling step. The heating using the high-density energy, such as high-frequency quenching, enables to heat only a region located in a predetermined depth from the surface and only a portion, so that a part of the volume of the product can be heated. Accordingly, a region that is hardened by the martensitic transformation caused by the subsequent rapid cooling can be reduced, occurrence of deformation due to the martensitic transformation can be reduced, and deterioration of the product accuracy can be prevented.

### Examples

Hereinafter, examples of the method of manufacturing the carburized steel member will be specifically described. It is noted that the examples are designed to illustrate the present invention, and not intended to restrict the scope of the invention.

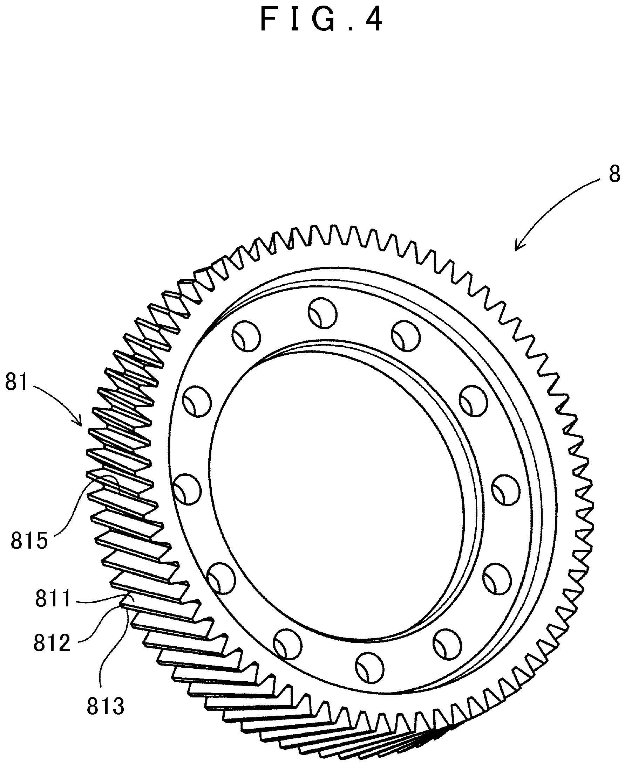

In these examples, hot rolling materials having respective basic chemical compositions (Test Nos. 1 to 32) shown in Table 1 were prepared, and after being subjected to annealing treatment after hot forging, a steel member (differential ring gear) 8 was manufactured by mechanical processing as shown in FIG. 4. The mechanical processing was used as a testing (cutting testing) for determining cutting properties of the steel member.

As is understood from Table 1, Test Nos. 1 to 23 are examples, and Test Nos. 24 to 32 are comparative examples of the basic chemical compositions of the materials. Among the comparative examples, Test Nos. 31 and 32 are examples in which SCM 420, which is conventional steel, is used as a material.

Next, after the mechanical processing, the steel member 8 is subjected to a carburizing step of heating the steel member 8 in a carburizing atmosphere to form a carburized layer on a surface. Then, after the carburizing step, the steel member 8 is at least subjected to a cooling step of cooling the steel member 8 to not more than the temperature at which structure transformation caused by cooling is completed, and a quenching step of rapidly cooling the steel member 8 after a desired portion is heated to an austenitic region with high-density energy. A material examination and fatigue testing are performed on the obtained steel member (carburized steel member) 8.

### [Table 1]

**(Table 1)**

| Test No. | | Basic chemical composition (mass%) | | | | | | | | | | | | | |
|---|---|---|---|---|---|---|---|---|---|---|---|---|---|---|---|
| | Classification | C | Si | Mn | Cr | P | S | Al | Ti | B | N | Nb | V | Ni | Mo |
| 1 | Inventive example | 0.25 | 0.65 | 1.25 | 0.11 | 0.013 | 0.019 | 0.032 | - | - | 0.0054 | - | - | - | - |
| 2 | Inventive example | 0.36 | 0.51 | 1.59 | 0.09 | 0.017 | 0.016 | 0.031 | - | - | 0.0125 | - | - | - | - |
| 3 | Inventive example | 0.21 | 0.81 | 0.81 | 0.12 | 0.015 | 0.012 | 0.032 | 0.015 | 0.0019 | 0.0038 | - | - | - | - |
| 4 | Inventive example | 0.15 | 0.75 | 1.00 | 0.12 | 0.016 | 0.013 | 0.029 | 0.031 | 0.0031 | 0.0038 | - | - | - | - |
| 5 | Inventive example | 0.10 | 0.81 | 0.82 | 0.11 | 0.015 | 0.001 | 0.033 | - | - | 0.0038 | - | - | - | - |
| 6 | Inventive example | 0.40 | 0.81 | 0.83 | 0.03 | 0.014 | 0.015 | 0.033 | 0.030 | 0.0019 | 0.0040 | - | - | - | - |
| 7 | Inventive example | 0.35 | 0.36 | 0.60 | 0.10 | 0.015 | 0.055 | 0.029 | - | - | 0.0040 | - | - | - | - |
| 8 | Inventive example | 0.20 | 2.98 | 0.91 | 0.10 | 0.014 | 0.005 | 0.031 | - | - | 0.0041 | - | - | - | - |
| 9 | Inventive example | 0.21 | 0.81 | 0.10 | 0.05 | 0.015 | 0.015 | 0.031 | - | - | 0.0040 | - | - | - | - |
| 10 | Inventive example | 0.20 | 0.80 | 2.99 | 0.10 | 0.015 | 0.149 | 0.030 | - | - | 0.0038 | - | - | - | - |
| 11 | Inventive example | 0.38 | 1.49 | 0.83 | - | 0.015 | 0.015 | 0.030 | - | - | 0.0037 | - | - | - | - |
| 12 | Inventive example | 0.20 | 0.51 | 1.10 | 0.19 | 0.015 | 0.011 | 0.033 | - | - | 0.0040 | - | - | - | - |
| 13 | Inventive example | 0.20 | 0.80 | 0.82 | 0.11 | 0.030 | 0.015 | 0.033 | - | - | 0.0041 | - | - | - | - |
| 14 | Inventive example | 0.19 | 0.50 | 1.49 | 0.10 | 0.015 | 0.014 | 0.005 | - | - | 0.0041 | - | - | - | - |
| 15 | Inventive example | 0.30 | 0.80 | 0.82 | 0.10 | 0.015 | 0.014 | 0.049 | - | - | 0.0040 | - | - | - | - |
| 16 | Inventive example | 0.20 | 1.30 | 1.20 | 0.10 | 0.014 | 0.014 | 0.030 | 0.005 | 0.0006 | 0.0038 | - | - | - | - |
| 17 | Inventive example | 0.19 | 0.45 | 0.82 | 0.07 | 0.015 | 0.008 | 0.032 | 0.190 | 0.0049 | 0.0042 | - | - | - | - |
| 18 | Inventive example | 0.20 | 0.80 | 0.81 | 0.10 | 0.015 | 0.009 | 0.029 | - | - | 0.0031 | - | - | - | - |
| 19 | Inventive example | 0.37 | 0.80 | 0.83 | 0.10 | 0.014 | 0.015 | 0.034 | - | - | 0.0296 | - | - | - | - |
| 20 | Inventive example | 0.19 | 0.91 | 0.81 | 0.11 | 0.015 | 0.014 | 0.030 | - | - | 0.0040 | 0.015 | - | - | - |
| 21 | Inventive example | 0.20 | 0.81 | 1.21 | 0.10 | 0.016 | 0.015 | 0.031 | - | - | 0.0041 | - | 0.04 | - | - |
| 22 | Inventive example | 0.20 | 0.37 | 0.83 | 0.10 | 0.015 | 0.014 | 0.030 | - | - | 0.0040 | - | - | 1.01 | - |
| 23 | Inventive example | 0.20 | 0.80 | 0.71 | 0.10 | 0.014 | 0.015 | 0.033 | - | - | 0.0037 | - | - | - | 0.06 |
| 24 | Comparative example | 0.21 | 0.30 | 0.79 | 0.10 | 0.015 | 0.014 | 0.030 | 0.015 | 0.0021 | 0.0056 | - | - | - | - |
| 25 | Comparative example | 0.41 | 0.79 | 0.83 | 0.10 | 0.015 | 0.060 | 0.033 | - | - | 0.0039 | - | - | - | - |
| 26 | Comparative example | 0.20 | 0.50 | 0.83 | 0.30 | 0.015 | 0.015 | 0.030 | - | - | 0.0041 | - | - | - | - |
| 27 | Comparative example | 0.21 | 0.91 | 0.66 | 0.23 | 0.016 | 0.019 | 0.030 | - | - | 0.0120 | - | - | - | - |
| 28 | Comparative example | 0.30 | 0.80 | 0.82 | 1.05 | 0.015 | 0.015 | 0.029 | 0.015 | 0.0015 | 0.0043 | - | - | - | - |
| 29 | Comparative example | 0.20 | 0.79 | 1.10 | 0.10 | 0.032 | 0.015 | 0.032 | - | - | 0.0039 | - | - | - | - |
| 30 | Comparative example | 0.32 | 1.29 | 0.60 | 0.08 | 0.013 | 0.161 | 0.033 | - | - | 0.0045 | - | - | - | - |
| 31 | Comparative example | 0.20 | 0.25 | 0.81 | 1.10 | 0.015 | 0.015 | 0.033 | - | - | 0.0081 | - | - | - | 0.15 |
| 32 | Comparative example | 0.21 | 0.34 | 0.79 | 1.10 | 0.015 | 0.014 | 0.031 | - | - | 0.0078 | - | - | - | 0.15 |

First, heat treatment equipment 5 for performing the carburizing step to the quenching step will be simply described.

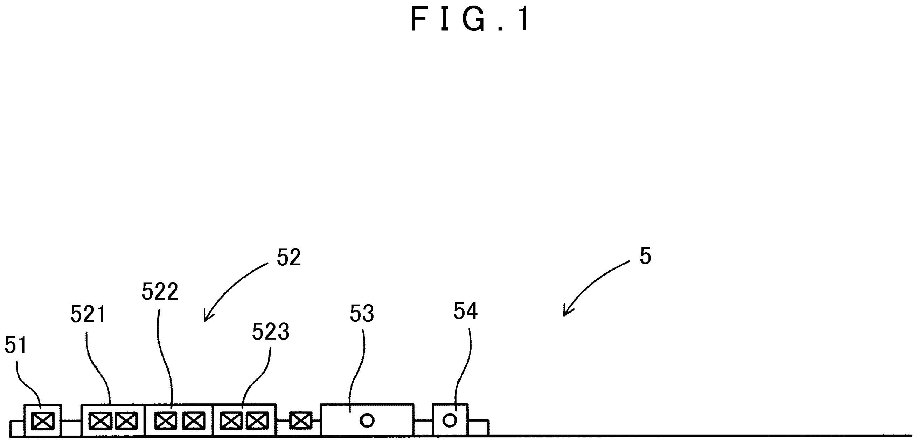

As shown in FIG. 1, the heat treatment equipment 5 is equipped with a prewashing tank 51 for washing the steel member before the carburizing and quenching treatment, a reduced pressure carburizing slow cooling apparatus 52 equipped with a heating chamber 521, a reduced pressure carburizing chamber 522, and a reduced pressure slow cooling chamber 523, a high-frequency quenching machine 53, and a magnetic flaw detector 54 for inspecting defects.

Next, the carburizing step and the cooling step performed by using the heat treatment equipment 5 will be described.

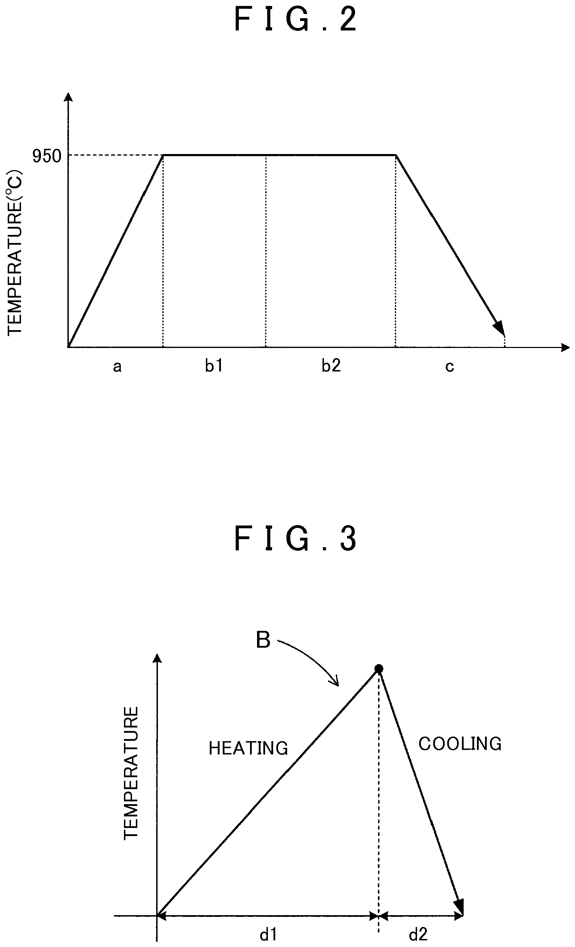

The carburizing step of this example is a reduced pressure carburizing step to be performed in carburizing gas under a reduced pressure lower than the atmospheric pressure. A heat pattern A in the step is shown in FIG. 2. In the drawing, the horizontal axis denotes time and the vertical axis denotes temperature.

As is understood from the drawing, in the heat pattern A in the carburizing step, temperature was raised to a carburizing temperature in a temperature rise region a, and then the temperature was kept to be constant in keeping regions blank b2. The temperature was constantly kept at 950°C, which is a temperature not less than the austenitizing temperature. The introductory region bl of the keeping region is a region for the carburizing stage in the carburizing treatment, and the subsequent region b2 is a region for the diffusion stage in the carburizing treatment.

In the example, a reduced pressure condition of the reduced pressure carburizing treatment was 1 hPa to 3.5 hPa, and acetylene was used as the carburizing gas in the region b1 of the carburizing stage. Furthermore, conditions that were preliminarily confirmed by preliminary experiments were employed for the carburizing conditions, and performed as described below.

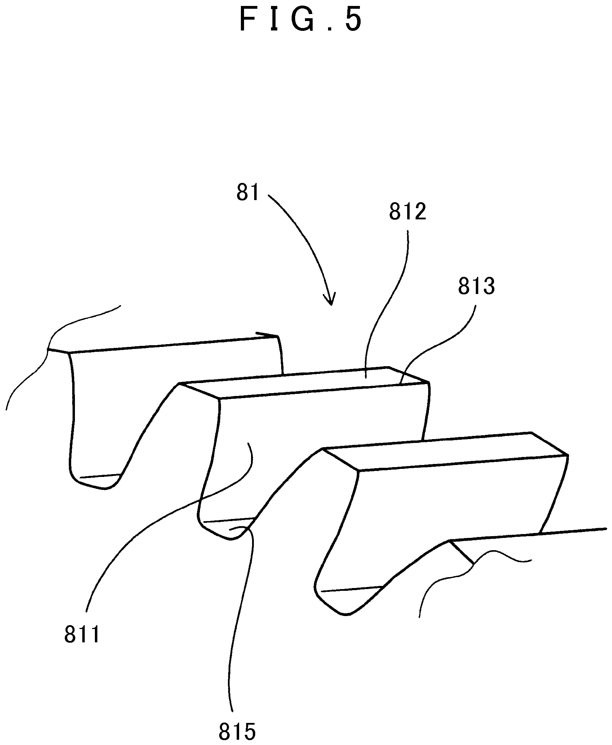

Specifically, the steel member 8 of the example is a differential ring gear and has a first portion (a carbon readily diffused portion) and a second portion (a carbon hardly diffused portion) whose diffusion rate of carbon entering during the carburizing treatment is different from that of the first portion because of the shapes. As shown in FIG. 5, the first portion is a tooth bottom 815 and a tooth surface 811, and the second portion in which the diffusion rate of the entering carbon is slower than that of the first portion is a tooth tip corner portion 813 (a corner portion between the tooth surface 811 and a tooth tip 812). In the example, the condition by which the surface carburizing concentration of the tooth bottom 815, which is the first portion, becomes within the range of 0.65±0.05 mass% was employed.

Next, after the diffusion stage of the reduced pressure carburizing treatment was ended, the treatment for a cooling region c was performed as the cooling step. In the example, a reduced pressure slow cooling step was employed, and the reduced pressure condition was 600 hPa. Furthermore, the cooling atmosphere gas was nitrogen (N₂). Furthermore, the cooling rate of the reduced pressure slow cooling step was set within the range of 0.1°C/sec to 3.0 °C/sec until the temperature was lowered to 150°C, which is lower than the A1 transformation point, from the austenitizing temperature or more right after the carburizing treatment.

The heat pattern A and the other conditions shown herein are only an example, and can be modified to the optimum conditions for the steel member to be treated by preliminary experiments, etc.

Next, the quenching step performed by using the heat treatment equipment 5 will be described.

The quenching step of the example employed high frequency heating as heating means, and employed water cooling as rapid cooling means. A heat pattern B thereof is shown in FIG. 3. In the drawing, the horizontal axis denotes time, and the vertical axis denotes temperature.

As shown in the drawing, the quenching step of the example includes a temperature rise region d1 in which a teeth profile portion 81, which is an outer periphery portion of the steel member 8, is heated to the austenitizing temperature or more with the high-frequency heating, and a rapid cooling region d2 in which water is sprayed for water quenching so that a cooling rate of not less than the rapid cooling critical cooling rate at which martensitic transformation occurs in the carburized layer can be readily obtained.

In the temperature rise region d1, the energy amount to be input was set lower than that in a condition under which normal high-frequency heating is performed, and the treatment was performed for 26.8 sec, which is relatively a long time, so that the whole interior portion of the teeth profile portion 81 became a temperature within the range of 750°C to 960°C.

The treatment for the rapid cooling region d2 was performed for about 13 sec, and the cooling rate was 50 °C/sec to 65 °C/sec. A method that can restrain occurrence of deformation most was employed for the heating with the high-frequency heating. In the method, the steel members 8 were carried (conveyed) one by one and subjected to heating treatment one by one, and during cooling after the heating, cooling water was sprayed toward the steel member 8 from the periphery while rotating the steel member 8.

The heat pattern B and the other conditions shown herein are only an example, and can be modified to the optimum conditions for the steel member to be treated by preliminary experiments, etc.

Hereinafter, conditions of each testing performed on the steel members will be described.

### <Cutting Property Testing>

The cutting property testing was performed when the steel member 8 was cut into a desired shape by the mechanical processing as described above.

In the cutting property testing, by using a carbide tool, lathe turning was performed under conditions that rim speed was 250 m/min, feed was 0.3 mm/rev, insection was 1.5 mm under a dry environment. Furthermore, ten steel members 8 were manufactured for conducting evaluation in the testing, and each of the ten steel members 8 was evaluated as a good one when there was no crack in the carbide tool, and was evaluated as a defective one when there was a crack in the carbide tool.

### <Material Examination>

A material examination was performed by collecting a sample from the tooth surface 811 of the steel member 8 on which no fatigue testing was performed.

Vickers hardness was measured with a load of 2.9 N for every 0.05 mm from a surface of the sample, and an effective curing depth prescribed in JIS G 0557 was measured.

Crystal grain was evaluated by obtaining an austenite crystal grain size number prescribed in JIS G 0551 at a depth portion of 0.4 mm from the surface of the sample.

In determination of the evaluation, the one whose effective curing depth was ensured by 0.8 mm or more, which had a difference in Vickers hardness at each of adjacent measuring points of less than HV 50 and no hardness unevenness, and whose austenite crystal grain size number was 6 or more, which means fine grains, was determined as a good one.

However, as for the one having a low strength in the fatigue testing, SEM observation was performed on a fracture surface and whether grain boundary was a brittle fracture surface was confirmed.

### <Fatigue Testing>

The fatigue testing was performed by a power circulating gearwheel testing machine. Module, pressure angle, torsion angle that are the specifications of a gear under test are 2.03, 18°, and 27°, respectively.

Dedendum bending fatigue strength (Nm) was evaluated by input torque that allowed durability of ten million times under a condition in which the temperature of a lubricant was 80 °C and the rotating speed was 2000 rpm. ATF was used as the lubricant.

Pitching (Nm) strength was evaluated by input torque by which pitching aerial proportion became 3% or less of the area per all teeth after 50 million times test under a condition in which the lubricant temperature was 120°C and the rotating speed was 4000 rpm. ATF was used as the lubricant.

Results of the above-mentioned testing are shown in Table 2.

### [Table 2]

**(Table 2)**

| Test No. | Classification | Cutting property testing result | Material testing result | Fatigue testing result Input torque (Nm) | |
|---|---|---|---|---|---|
| | | | | Dedendum | Pitching |
| 1 | inventive example | good | good | 406 | 270 |
| 2 | inventive example | good | good | 400 | 253 |
| 3 | inventive example | good | good | 418 | 282 |
| 4 | inventive example | good | good | 406 | 276 |
| 5 | inventive example | good | good | 424 | 288 |
| 6 | inventive example | good | good | 419 | 290 |
| 7 | inventive example | good | good | 406 | 206 |
| 8 | inventive example | good | good | 365 | 300 |
| 9 | inventive example | good | good | 383 | 276 |
| 10 | inventive example | good | good | 412 | 288 |
| 11 | inventive example | good | good | 365 | 306 |
| 12 | inventive example | good | good | 394 | 222 |
| 13 | inventive example | good | good | 377 | 282 |
| 14 | inventive example | good | good | 406 | 259 |
| 15 | inventive example | good | good | 412 | 282 |
| 16 | inventive example | good | good | 371 | 306 |
| 17 | inventive example | good | good | 377 | 247 |
| 18 | inventive example | good | good | 418 | 282 |
| 19 | inventive example | good | good | 406 | 270 |
| 20 | inventive example | good | good | 371 | 282 |
| 21 | inventive example | good | good | 388 | 300 |
| 22 | inventive example | good | good | 377 | 211 |
| 23 | inventive example | good | good | 418 | 276 |
| 24 | comparative example | good | good | 412 | 194 |
| 25 | comparative example | cutting defect | (testing piece manufacturing impossible) | | |
| 26 | comparative example | good | hardness unevenness | 330 | 194 |
| 27 | comparative example | good | hardness unevenness | 325 | 188 |
| 28 | comparative example | good | hardness unevenness | 324 | 188 |
| 29 | comparative example | good | grain boundary brittle fracture surface | 294 | 164 |
| 30 | comparative example | good | grain boundary brittle fracture surface | 303 | 165 |
| 31 | comparative example | good | hardness unevenness | 342 | 200 |
| 32 | comparative example | good | hardness unevenness | 340 | 205 |

As shown in Table 2, it becomes apparent that the ring gears of Test Nos. 1 to 23 in the example have good cutting properties of the material and have excellent material properties and fatigue strength. Specifically, compared with the conventional steel SCM 420 (Test Nos. 31 and 32), in every example, the dedendum fatigue strength was fairly larger, and the pitching strength was also equal or larger.

On the other hand, the fatigue strength of Test No. 24 of the comparative example was low. This is because that quenching properties were low and improvement of a resistance to temper softening could not be fully obtained because of the steel material whose content of Si is less than 0.35%.

The cutting properties of the material were poor in Test No. 25 of the comparative example. This is because that the material was hardened too much because of the steal material whose content of C exceeded 0.4%.

In Test Nos. 26 to 28 of the comparative examples, each of the fatigue strength was low. This is because that production of a Cr carbide was recognized in the material examination because of the steel material whose content of Cr exceeded 0.2%, and hardness unevenness occurred.

In Test No. 29 of the comparative example, the fatigue strength was low. The reason of the low fatigue strength is that a grain boundary brittle fracture surface occurred because of the steel material whose content of P exceeded 0.03%.

In Test No. 30 of the comparative example, the fatigue strength was low. The reason of the low fatigue strength is that a grain boundary brittle fracture surface occurred because of the steel material whose content of S exceeded 0.15%.

Test Nos. 31 and 32 of the comparative examples are examples in which similar treatment was performed on the SCM 420 of JIS, which is conventional steel. Hardness unevenness occurred in the comparative examples because both of Cr and Mo were included and the compositions were not optimized. Furthermore, it becomes apparent, from comparison between the examples and the comparative examples, that the carburized steel members of the examples have excellent dedendum fatigue strength and other properties equivalent to or superior than those of conventional Cr-Mo alloy steel even when the contents of Cr and Mo are reduced to reduce the material cost.

### <Observation of First to Third Layers>

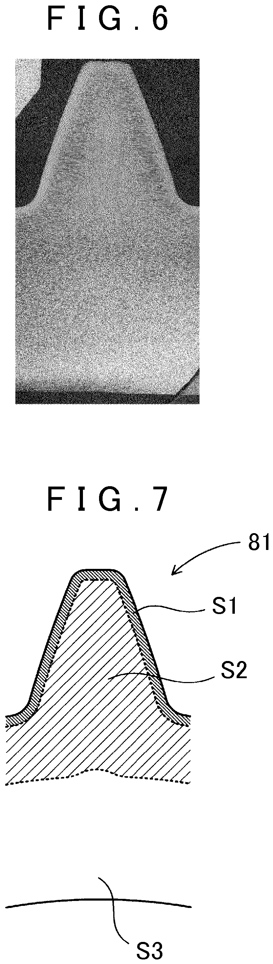

The thicknesses of first to third layers were measured by observing metal structure of a cross section of the steel member of Test No. 3. The steel member was corroded with alcohol solution having nitric acid of 3% to 5%, and the metal structure was observed with an optical microscope. A photograph of the metal structure is shown in FIG. 6, and an explanatory diagram made to simply show the structure of each layer is shown in FIG. 7. In the drawing, reference numeral S1 denotes the first layer, reference numeral S2 denotes the second layer, and reference numeral S3 denotes the third layer, respectively.

The first layer S1 is a portion of the outermost layer on which the quenching step is performed, is a portion whose carbon concentration of the surface is 0.60 mass% to 0.85 mass% and in which the carbon concentration is gradually lowered to the carbon concentration of the base material (within the range of the basic chemical composition) toward inside, and is a layer including martensitic structure in which no grain boundary oxide layer caused by Si exists. It was observed that the first layer S1 existed, and it was found that the thickness of the layer was within the range of 0.7 mm to 1.3 mm.

The second layer S2 is located inside the first layer S1, and the carbon concentration is 0.1 mass% to 0.4 mass%, that is, the carbon concentration of the base material (within the range of the basic chemical composition), and is a layer including martensitic structure. It was observed that the second layer S2 existed, and it was found that the thickness of the layer was within the range of 2 mm to 5 mm.

The third layer S3 is located inside the second layer S2, and the carbon concentration is 0.1 mass% to 0.4 mass%, that is, the carbon concentration of the base material (within the range of the basic chemical composition), and is a layer including no martensitic structure. It was confirmed that the third layer S3 existed.

As a result of the structural observation, it became apparent that the thickness of the second layer S2 was larger than the thickness of the first layer S1 in the steel member of Test No. 3.

Graphite grain was not produced in any of the first to third layers. It has been know that graphite grain is produced by keeping the temperature of the steel member for a certain amount of time within the temperature range of, for example, 650°C to 720°C after the carburizing treatment. However, as described above, when at least slow cooling is performed right after the carburizing treatment, production of graphite grain can be prevented.

## Claims

1. A method of manufacturing a carburized steel member, comprising:
a carburizing step of forming a carburized layer on a surface layer by heating a steel member to an austenitizing temperature or higher in a carburizing atmosphere where oxygen concentration is lower than that of the atmosphere,
wherein, as a basic chemical composition, the steel member consists of, by mass%, C: 0.1% to 0.4%, Si: 0.35% to 3.0%, Mn: 0.1% to 3.0%, P: 0.03% or less, S: 0.15% or less, Al: 0.005% to 0.05%, N: 0.03% or less, Cr: less than 0.2%, Mo: 0.1% or less, optionally Ti: 0.005% to 0.2% and B: 0.0006% to 0.005%, optionally either or both of Nb: 0.01% to 0.3% and V: 0.01% to 0.2%, optionally Ni: 0.1% to 3.0%, and a remainder constituted of Fe and unavoidable impurities;
a cooling step of, subsequent to the carburizing step, cooling the steel member at a cooling rate slower than a cooling rate at which martensitic transformation occurs, and cooling the steel member to not higher than a temperature at which structural transformation caused by cooling is completed; and
a quenching step of heating a desired portion of the steel member with high-density energy to an austenitic region, and thereafter cooling the steel member at a cooling rate of not slower than the cooling rate at which martensitic transformation occurs.

2. The method of manufacturing a carburized steel member according to claim 1, wherein the cooling step is started immediately after the carburizing step so as not to precipitate solid solution of carbon in austenite created in the carburizing step as graphite grain.

3. The method of manufacturing a carburized steel member according to claim 1 or 2, wherein the carburizing step is performed under a condition that a surface carburizing concentration of the steel member after diffusion is 0.8% or less.

4. The method of manufacturing a carburized steel member according to any one of claims 1 to 3, wherein
the steel member on which the carburizing step is performed includes a first portion and a second portion whose diffusion rate of carbon entering when the carburizing treatment is performed is different from that of the first portion because of shapes thereof, the entering carbon in the second portion has a lower diffusion rate than that in the first portion, and
the carburizing step is performed under a condition that a surface carburizing concentration of the first portion is within a range of 0.65±0.1 mass%.

5. A carburized steel member that is manufactured by: a carburizing step of forming a carburized layer on a surface layer by heating a steel member to an austenitizing temperature or higher in a carburizing atmosphere where oxygen concentration is lower than that of the atmosphere; a cooling step of, subsequent to the carburizing step, cooling the steel member at a cooling rate slower than a cooling rate at which martensitic transformation occurs, and cooling the steel member to not higher than a temperature at which structural transformation caused by cooling is completed; and a quenching step of heating a desired portion of the steel member with high-density energy to an austenitic region, and thereafter cooling the steel member at a cooling rate of not slower than the cooling rate at which martensitic transformation occurs, wherein
as a basic chemical composition, the steel member consists of, by mass%, C: 0.1% to 0.4%, Si: 0.35% to 3.0%, Mn: 0.1% to 3.0%, P: 0.03% or less, S: 0.15% or less, Al: 0.005% to 0.05%, N: 0.03% or less, Cr: less than 0.2%, Mo: 0.1% or less, optionally Ti: 0.005% to 0.2% and B: 0.0006% to 0.005%, optionally either or both of Nb: 0.01% to 0.3% and V: 0.01% to 0.2%, optionally Ni: 0.1% to 3.0%, and a remainder constituted of Fe and unavoidable impurities, and
the surface layer of the portion on which the quenching step has been performed includes:
a first layer having a carbon concentration higher than the range of the basic chemical composition and including a martensitic structure in which no grain boundary oxide layer caused by Si exists;
a second layer located inside the first layer, having a carbon concentration within the range of the basic chemical composition, and including a martensitic structure; and
a third layer located inside the second layer, having a carbon concentration within the range of the basic chemical composition, and including no martensitic structure.

6. The carburized steel member according to claim 5, wherein the carbon concentration of a surface portion of the first layer is within a range of 0.6 mass% to 0.85 mass% and is gradually lowered to approach the range of the basic chemical composition toward a boundary with the second layer.

7. The carburized steel member according to claim 5 or 6, wherein the second layer has a larger thickness than that of the first layer.

8. The carburized steel member according to any one of claims 5 to 7, wherein Mo content in the basic chemical composition is less than 0.01%.

9. A case hardening steel for the carburized steel member in the method according to claim 1, wherein
the case hardening steel has a basic chemical composition consisting of, by mass%, C: 0.1% to 0.4%, Si: 0.35% to 3.0%, Mn: 0.1% to 3.0%, P: 0.03% or less, S: 0.15% or less, Al: 0.005% to 0.05%, N: 0.03% or less, Cr: less than 0.2%, Mo: 0.1% or less, optionally Ti: 0.005% to 0.2% and B: 0.0006% to 0.005%, optionally either or both of Nb: 0.01% to 0.3% and V: 0.01% to 0.2%, optionally Ni: 0.1% to 3.0%, and a remainder constituted of Fe and unavoidable impurities.

10. The case hardening steel according to claim 9, wherein the Mo content in the basic chemical composition is less than 0.01%.

## Patentansprüche

1. Verfahren zur Herstellung eines aufgekohlten Stahlbauteils, mit:
einem Aufkohlungsschritt, in dem auf einer Oberflächenschicht eine aufgekohlte Schicht ausgebildet wird, indem ein Stahlbauteil in einer Aufkohlungsatmosphäre, in der die Sauerstoffkonzentration niedriger als die der Atmosphäre ist, auf eine Austenitisierungstemperatur oder höher erhitzt wird,
wobei als eine chemische Grundzusammensetzung das Stahlbauteil in Masse-% besteht aus C: 0,1% bis 0,4%, Si: 0,35% bis 3,0%, Mn: 0,1% bis 3,0%, P: 0,03% oder weniger, S: 0,15% oder weniger, Al: 0,005% bis 0,05%, N: 0,03% oder weniger, Cr: weniger als 0,2%, Mo: 0,1% oder weniger, optional Ti: 0,005% bis 0,2% und B: 0,0006% bis 0,005%, optional Nb: 0,01% bis 0,3% und/oder V: 0,01% bis 0,2%, optional Ni: 0,1% bis 3,0% und einem Rest, der von Fe und unvermeidbaren Verunreinigungen gebildet wird;
einem Kühlschritt, in dem im Anschluss an den Aufkohlungsschritt das Stahlbauteil bei einer Kühlgeschwindigkeit gekühlt wird, die langsamer als eine Kühlgeschwindigkeit ist, bei der martensitische Umwandlung auftritt, und das Stahlbauteil bis nicht höher als eine Temperatur gekühlt wird, bei der eine durch das Kühlen verursachte Gefügeumwandlung abgeschlossen ist; und
einem Abschreckschritt, in dem ein gewünschter Abschnitt des Stahlbauteils mit Energie hoher Dichte zu einem austenitischen Bereich erhitzt wird und das Stahlbauteil danach bei einer Kühlgeschwindigkeit von nicht langsamer als der Kühlgeschwindigkeit, bei der martensitische Umwandlung auftritt, gekühlt wird.

2. Verfahren zur Herstellung eines aufgekohlten Stahlbauteils nach Anspruch 1, wobei der Kühlschritt unmittelbar nach dem Aufkohlungsschritt gestartet wird, damit in Austenit, das im Aufkohlungsschritt erzeugt wird, kein Kohlenstoffmischkristall als Graphitkorn ausgeschieden wird.

3. Verfahren zur Herstellung eines aufgekohlten Stahlbauteils nach Anspruch 1 oder 2, wobei der Aufkohlungsschritt unter einer Bedingung durchgeführt wird, dass eine Oberflächenaufkohlungskonzentration des Stahlbauteils nach Diffusion 0,8% oder weniger beträgt.

4. Verfahren zur Herstellung eines aufgekohlten Stahlbauteils nach einem der Ansprüche 1 bis 3, wobei
das Stahlbauteil, auf dem der Aufkohlungsschritt durchgeführt wird, einen ersten Abschnitt und einen zweiten Abschnitt aufweist, dessen Diffusionsrate an Kohlenstoff, der eindringt, wenn die Aufkohlungsbehandlung durchgeführt wird, von der des ersten Abschnitts wegen ihrer Formen verschieden ist, wobei der eindringende Kohlenstoff im zweiten Abschnitt eine geringere Diffusionsrate als der im ersten Abschnitt hat, und
der Aufkohlungsschritt unter einer Bedingung durchgeführt wird, dass eine Oberflächenaufkohlungskonzentration des ersten Abschnitts in einem Bereich von 0,65±0,1 Masse-% liegt.

5. Aufgekohltes Stahlbauteil, das hergestellt ist durch: einen Aufkohlungsschritt, in dem auf einer Oberflächenschicht eine aufgekohlte Schicht ausgebildet wird, indem ein Stahlbauteil in einer Aufkohlungsatmosphäre, in der die Sauerstoffkonzentration niedriger als die der Atmosphäre ist, auf eine Austenitisierungstemperatur oder höher erhitzt wird; einen Kühlschritt, in dem im Anschluss an den Aufkohlungsschritt das Stahlbauteil bei einer Kühlgeschwindigkeit gekühlt wird, die langsamer als eine Kühlgeschwindigkeit ist, bei der martensitische Umwandlung auftritt, und das Stahlbauteil bis nicht höher als eine Temperatur gekühlt wird, bei der eine durch das Kühlen verursachte Gefügeumwandlung abgeschlossen ist; und einen Abschreckschritt, in dem ein gewünschter Abschnitt des Stahlbauteils mit Energie hoher Dichte zu einem austenitischen Bereich erhitzt wird und das Stahlbauteil danach bei einer Kühlgeschwindigkeit von nicht langsamer als der Kühlgeschwindigkeit, bei der martensitische Umwandlung auftritt, gekühlt wird, wobei
als eine chemische Grundzusammensetzung das Stahlbauteil in Masse-% besteht aus C: 0,1% bis 0,4%, Si: 0,35% bis 3,0%, Mn: 0,1% bis 3,0%, P: 0,03% oder weniger, S: 0,15% oder weniger, Al: 0,005% bis 0,05%, N: 0,03% oder weniger, Cr: weniger als 0,2%, Mo: 0,1% oder weniger, optional Ti: 0,005% bis 0,2% und B: 0,0006% bis 0,005%, optional Nb: 0,01% bis 0,3% und/oder V: 0,01% bis 0,2%, optional Ni: 0,1% bis 3,0% und einem Rest, der von Fe und unvermeidbaren Verunreinigungen gebildet wird, und
die Oberflächenschicht des Abschnitts, auf dem der Abschreckschritt durchgeführt worden ist, Folgendes aufweist:
eine erste Schicht, die eine Kohlenstoffkonzentration hat, die höher als der Bereich der chemischen Grundzusammensetzung ist, und die ein martensitisches Gefüge aufweist, in dem keine durch Si verursachte Korngrenzenoxidschicht vorkommt;
eine zweite Schicht, die sich innerhalb der ersten Schicht befindet, die eine Kohlenstoffkonzentration im Bereich der chemischen Grundzusammensetzung hat und die ein martensitisches Gefüge aufweist; und
eine dritte Schicht, die sich innerhalb der zweiten Schicht befindet, die eine Kohlenstoffkonzentration im Bereich der chemischen Grundzusammensetzung hat und die kein martensitisches Gefüge aufweist.

6. Aufgekohltes Stahlbauteil nach Anspruch 5, wobei die Kohlenstoffkonzentration eines Oberflächenabschnitts der ersten Schicht in einem Bereich von 0,6 Masse-% bis 0,85 Masse-% liegt und allmählich absinkt, sodass sie sich zu einer Grenze mit der zweiten Schicht hin dem Bereich der chemischen Grundzusammensetzung nähert.

7. Aufgekohltes Stahlbauteil nach Anspruch 5 oder 6, wobei die zweite Schicht eine größere Dicke als die erste Schicht hat.

8. Aufgekohltes Stahlbauteil nach einem der Ansprüche 5 bis 7, wobei der Mo-Gehalt in der chemischen Grundzusammensetzung weniger als 0,01% beträgt.

9. Einsatzstahl für das aufgekohlte Stahlbauteil in dem Verfahren gemäß Anspruch 1, wobei
der Einsatzstahl eine chemische Grundzusammensetzung hat, die in Masse-% besteht aus C: 0,1% bis 0,4%, Si: 0,35% bis 3,0%, Mn: 0,1% bis 3,0%, P: 0,03% oder weniger, S: 0,15% oder weniger, Al: 0,005% bis 0,05%, N: 0,03% oder weniger, Cr: weniger als 0,2%, Mo: 0,1% oder weniger, optional Ti: 0,005% bis 0,2% und B: 0,0006% bis 0,005%, optional Nb: 0,01% bis 0,3% und/oder V: 0,01% bis 0,2%, optional Ni: 0,1% bis 3,0% und einem Rest, der von Fe und unvermeidbaren Verunreinigungen gebildet wird.

10. Einsatzstahl nach Anspruch 9, wobei der Mo-Gehalt in der chemischen Grundzusammensetzung weniger als 0,01% beträgt.

## Revendications

1. Procédé de fabrication d'un élément d'acier cémenté, comprenant :
une étape de cémentation formant une couche cémentée sur une couche de surface par chauffage d'un élément d'acier à une température d'austénitisation ou supérieure dans une atmosphère de cémentation où la concentration en oxygène est inférieure à celle de l'atmosphère,
dans lequel, comme composition chimique de base, l'élément d'acier est constitué de, en % en masse, C : 0,1 % à 0,4 %, Si : 0,35 % à 3,0 %, Mn : 0,1 % à 3,0 %, P : 0,03 % ou inférieur, S : 0,15 % ou inférieur, Al : 0,005 % à 0,05 %, N : 0,03 % ou inférieur, Cr : moins de 0,2 %, Mo : 0,1 % ou inférieur, éventuellement Ti : 0,005 % à 0,2 % et B : 0,0006 % à 0,005 %, éventuellement l'un ou les deux de Nb : 0,01 % à 0,3 % et V : 0,01 % à 0,2 %, éventuellement Ni : 0,1 % à 3,0 %, et un reste constitué de Fe et d'impuretés inévitables ;
une étape de refroidissement, après l'étape de cémentation, refroidissant l'élément d'acier à une vitesse de refroidissement inférieure à une vitesse de refroidissement à laquelle une transformation martensitique a lieu, et refroidissant l'élément d'acier à au plus une température à laquelle une transformation structurelle occasionnée par le refroidissement est achevée ; et
une étape de trempe chauffant une portion souhaitée de l'élément d'acier avec une énergie haute densité jusqu'à une région austénitique, et refroidissant après cela l'élément d'acier à une vitesse de refroidissement qui n'est pas inférieure à la vitesse de refroidissement à laquelle une transformation martensitique a lieu.

2. Procédé de fabrication d'un élément d'acier cémenté selon la revendication 1, dans lequel l'étape de refroidissement est démarrée immédiatement après l'étape de cémentation afin de ne pas faire précipiter une solution solide de carbone dans l'austénite créée dans l'étape de cémentation comme grain de graphite.

3. Procédé de fabrication d'un élément d'acier cémenté selon la revendication 1 ou 2, dans lequel l'étape de cémentation est réalisée dans une condition telle qu'une concentration de cémentation de surface de l'élément d'acier après diffusion est de 0,8 % ou inférieure.

4. Procédé de fabrication d'un élément d'acier cémenté selon l'une quelconque des revendications 1 à 3, dans lequel
l'élément d'acier sur lequel l'étape de cémentation est réalisée comprend une première portion et une seconde portion dont la vitesse de diffusion de carbone entrant lorsque le traitement de cémentation est réalisé est différente de celle de la première portion en raison de ses formes, le carbone entrant dans la seconde portion présente une vitesse de diffusion plus faible que celle dans la première portion, et
l'étape de cémentation est réalisée dans une condition consistant en ce qu'une concentration de cémentation de surface de la première portion se trouve dans un intervalle de 0,65 ± 0,1 % en masse.

5. Elément d'acier cémenté qui est fabriqué par : une étape de cémentation formant une couche cémentée sur une couche de surface par chauffage d'un élément d'acier à une température d'austénitisation ou supérieure dans une atmosphère de cémentation où la concentration en oxygène est inférieure à celle de l'atmosphère ; une étape de refroidissement, après l'étape de cémentation, refroidissant l'élément d'acier à une vitesse de refroidissement inférieure à une vitesse de refroidissement à laquelle une transformation martensitique a lieu, et refroidissant l'élément d'acier à au plus une température à laquelle une transformation structurelle occasionnée par le refroidissement est achevée ; et une étape de trempe chauffant une portion souhaitée de l'élément d'acier avec une énergie haute densité jusqu'à une région austénitique, et refroidissant après cela l'élément d'acier à une vitesse de refroidissement qui n'est pas inférieure à la vitesse de refroidissement à laquelle une transformation martensitique a lieu, dans lequel
comme composition chimique de base, l'élément d'acier consiste en, % en masse, C : 0,1 % à 0,4 %, Si : 0,35 % à 3,0 %, Mn : 0,1 % à 3,0 %, P : 0,03 % ou inférieur, S : 0,15 % ou inférieur, Al : 0,005 % à 0,05 %, N : 0,03 % ou inférieur, Cr : moins de 0,2 %, Mo : 0, 1 % ou inférieur, éventuellement Ti : 0,005 % à 0,2 % et B : 0,0006 % à 0,005 %, éventuellement l'un ou les deux de Nb : 0,01 % à 0,3 % et V : 0,01 % à 0,2 %, éventuellement Ni : 0,1 % à 3,0 %, et un reste constitué de Fe et d'impuretés inévitables, et
la couche de surface de la portion sur laquelle l'étape de trempe a été réalisée comprend :
une première couche ayant une concentration en carbone supérieure à l'intervalle de la composition chimique de base et incluant une structure martensitique dans laquelle aucune couche d'oxyde de limite de grains occasionnée par Si n'existe ;
une seconde couche disposée dans la première couche, ayant une concentration en carbone dans l'intervalle de la composition chimique de base, et incluant une structure martensitique ; et
une troisième couche disposée à l'intérieur de la seconde couche, ayant une concentration en carbone dans l'intervalle de la composition chimique de base, et n'incluant pas de structure martensitique.

6. Elément d'acier cémenté selon la revendication 5, dans lequel la concentration en carbone d'une portion de surface de la première couche se trouve dans un intervalle de 0,6 % en masse à 0,85 % en masse et est progressivement abaissée pour approcher l'intervalle de la composition chimique de base vers une limite avec la seconde couche.

7. Elément d'acier cémenté selon la revendication 5 ou 6, dans lequel la seconde couche présente une épaisseur plus large que celle de la première couche.

8. Elément d'acier cémenté selon l'une quelconque des revendications 5 à 7, dans lequel la teneur en Mo dans la composition chimique de base est inférieure à 0,01 %.

9. Acier de cémentation pour l'élément d'acier cémenté dans le procédé selon la revendication 1, dans lequel
l'acier de cémentation présente une composition chimique de base consistant en, en % en masse, C : 0,1 % à 0,4 %, Si : 0,35 % à 3,0 %, Mn : 0,1 % à 3,0 %, P : 0,03 % ou inférieur, S : 0,15 % ou inférieur, Al : 0,005 % à 0,05 %, N : 0,03 % ou inférieur, Cr : moins de 0,2 %, Mo : 0,1 % ou inférieur, éventuellement Ti : 0,005 % à 0,2 % et B : 0,0006 % à 0,005 %, éventuellement l'un ou les deux de Nb : 0,01 % à 0,3 % et V : 0,01 % à 0,2 %, éventuellement Ni : 0,1 % à 3,0 %, et un reste constitué de Fe et d'impuretés inévitables.

10. Acier de cémentation selon la revendication 9, dans lequel la teneur en Mo dans la composition chimique de base est inférieure à 0,01 %.
